# EUROPEAN PATENT SPECIFICATION

(11) **EP 1 023 616 B1**
(45) Date of publication and mention of the grant of the patent: **09.07.2003**
(21) Application number: 98967049.2
(22) Date of filing: 07.12.1998
(51) Int. Cl.: G02B 7/00, G02B 5/00, F41G 1/04, F41G 11/00, F42B 10/46

(54) **GENERAL ASPHERE-CONIC CONFORMAL OPTICAL WINDOWS**
ASPHÄRISCH - KONISCHES KONFORMES OPTISCHES FENSTER
FENETRES OPTIQUES CONFORMES GENERALEMENT ASPHERICO-CONIQUES

(30) Priority: 08.12.1997 US 67914 P; 05.11.1998 US 187432
(43) Date of publication of application: 02.08.2000
(73) Proprietor: Raytheon Company, El Segundo, California 90245-0902 (US)
(72) Inventor: CROWTHER, Blake, G., Logan, UT 84341 (US); McKENNEY, Dean, B., Tucson, AZ 85718 (US); SPARROLD, Scott, W., Tucson, AZ 85748 (US); MILLS, James, B., Tucson, AZ 85718 (US)
(74) Representative: Jackson, Richard Eric
(86) International application number: PCT/US98/25911
(87) International publication number: WO 99/038033

(56) References cited:
- EP-A- 0 616 187
- US-A- 4 073 985
- US-A- 4 291 848
- US-A- 5 327 220

## Description

This invention relates to an optical system having a window therein, and in particular to such an optical system used in an aircraft or missile wherein the window is a conformal window.

An optical sensor receives radiated energy from a scene and converts it to an electrical signal. The electrical signal is provided to a display or further processed for pattern recognition or the like. Optical sensors are available in a variety of types and for wavelengths ranging from the ultraviolet, through the visible, and into the infrared. Optical sensors are used in a variety of commercial and military applications. In some applications the optical sensors are fixed in orientation, and in others the optical sensor is movable such as by a pivoting motion to allow sensing over a wide angular range.

The optical sensors generally employ a photosensitive material that faces the scene and produces an electrical output responsive to the incident energy. The photosensitive material and remainder of the sensor structure are rather fragile, and are easily damaged by dirt, erosion, chemicals, or high air velocity. In service, the sensor is placed behind a window through which it views the scene and which protects the sensor from such external effects. The window must be transparent to the radiation of the operating wavelength of the sensor and resist attack from the external forces. The window must also permit the sensor to view the scene over the specified field of regard.

The window would ideally introduce no wavefront aberration at the center of the field of view, other than possibly spherical aberration, particularly if the sensor is an imaging sensor. The thicker and more highly curved is the window, the more likely is the introduction of significant wavefront aberration. A wide variety of sensor windows have been used in various aircraft applications. In many cases such as low-speed commercial helicopters, flat windows are acceptable. Windows that are shaped as segments of spheres are used in aircraft and missile applications, but for these windows the wavefront aberration tends to be high if the gimbal location is not at the spherical center of the window. In all of these window types, if the window must be wide or must project a substantial distance into an airflow to permit a large field of regard, the aerodynamic drag introduced by the window is large.

For applications involving aircraft and missiles operating at high speeds, the window should be relatively aerodynamic such that the presence of the window extending into the airstream does not introduce unacceptably high and/or asymmetric aerodynamic drag to the vehicle. A conformal window is therefore beneficial to reducing drag and increasing the range of the aircraft. Some existing conformal windows introduce large wavefront aberrations into the sensor beam, particularly for high azimuthal pointing angles of the sensor.

An important consideration in achieving acceptable cost of the optical system is that the conformal window must be easily tested for its accuracy of shape, and must also be readily aligned upon mounting in the flight vehicle. The more complex the shape of the conformal window, the greater the challenge in testing and alignment.

EP0616187 discloses an optical imaging system including a generally conical, transparent protective dome and an optically refractive fixed corrector for reversing conical deformation created by viewing through the dome. The system may utilise a perfect cone having flat sides as the protective dome.

There is a need for an improved window to be used in conformal window applications in high-speed missiles and aircraft. The present invention fulfills this need, and further provides related advantages.

### SUMMARY OF THE INVENTION

The present invention provides an optical system and methods of testing and designing a window as claimed in claims 1, 12 and 17. The shape of the window is selected to be conformal for aerodynamic purposes and capable of optimization of achieve excellent optical properties. The window is designed to a preselected nominal shape, and the actual fabricated shape is readily determined and compared to the nominal shape to assess whether the actual window is within specified manufacturing tolerances and also whether any inaccuracies may be compensated for with optical compensation systems.

In accordance with the invention, an optical system comprises a window made of a curved piece of a transparent material having an inner surface and an outer surface. The inner surface has a nominal inner surface conicoidal shape whose shape is defined by a first conic sag relationship. The first conic sag relationship may preferably be expressed in the mathematical form${\text{z = cρ}}^{\text{2}} {\text{/(1+(1-(1+k)c}}^{\text{2}} {\text{ρ}}^{\text{2}} {\text{)}}^{\text{1/2}} \text{,}$ where z is the distance along an axis of symmetry of the surface, ρ is the distance from the centerline to the surface, and k and c are constants. Other equivalent expressions for a conicoidal shape may be used to describe the shape of the inner surface.

The outer surface has a nominal outer surface shape of a general aspheric form; but which may for many useful cases be defined as a second conic sag relationship modified by at least one aspheric term. The second conic sag relationship, which may be modified by at least one aspheric term, is preferably expressed in the mathematical form${\text{z' = c'ρ'}}^{\text{2}} {\text{/(1+(1-(1+k')c'}}^{\text{2}} {\text{ρ'}}^{\text{2}} {\text{)}}^{\text{1/2}} {\text{+ Aρ'}}^{\text{4}} {\text{+ Bρ'}}^{\text{6}} {\text{+ Cρ'}}^{\text{8}} {\text{+ Dρ'}}^{\text{10}} \text{,}$ where z' is the distance along an axis of symmetry of the surface, p' is the distance from the centerline to the surface, and k', c', A, B, C, and D are constants. Many other mathematic relationships may used to express a general aspheric shape. For the present purposes, such other general aspheric mathematical forms are equivalent to those expressed herein.

Far less desirably, the outer surface of an example not falling under the scope of the present invention may be defined by a first conic sag relationship and the inner surface may be defined by a second conic sag relationship modified by at least one aspheric term. This approach would, however, negate some of the testing and alignment advantages discussed subsequently and falls outside the scope of the claims.

The inner surface is necessarily conicoidal to facilitate the testing and alignment described subsequently. The other surface of the window is selected to have another shape which, in combination with the conicoidal surface of the window, will impart to the window the desired net refraction as part of the optical system. This embodiment also falls outside the scope of the claims. That is, the selection of the one surface as conicoidal is a key in order to facilitate testing and alignment, and the shape of the other surface is selected in conjunction with the shape of the conicoidal surface to achieve the desired optical performance.

The optical system preferably includes a sensor sensitive to energy of an operating wavelength. The sensor is positioned interiorly to the window, that is, closer to the inner surface of the window than to the outer surface. The transparent material is transparent to energy of the operating wavelength. There is typically in addition an optical train positioned between the inner surface of the window and the sensor to direct the optical beam onto the sensor.

The window is designed so that the nominal inner surface shape is conicoidal in form to facilitate testing and subsequent alignment of the window in an aircraft or other structure. The fact that the conicoidal shape has two focal points, an adjacent focus close to the inner surface and a remote focus further from the inner surface, is used in the testing and alignment. The testing is required because, even though the nominal inner surface shape is designed to a particular nominal relationship, manufacturing operations usually result in some variations in the shape from the idealized nominal shape that is desired. To assess these variations and determine whether they are within acceptable tolerances, the window is conveniently tested by passing a test beam of a two-beam interferometer through the remote focus, reflecting the beam from the inner surface toward the adjacent focus, reflecting the beam from a spherical mirror at the adjacent focus back along generally the same ray path (but which may not be perfectly the same ray path due to defects in the inner surface) to the interferometer, and interferometrically combining the test beam and a reference beam of the interferometer. Defects in the inner surface are indicated by fringe displacements, which may be counted to determine the number of 1/2 wavelengths by which the inner surface varies from that desired. With this information, it is determined whether the window actual inner surface shape falls within selected tolerance limits. The same principles are also used to align the window as it is mounted in the structure.

The nominal outer surface shape of the window is selected so that, in conjunction with the conicoidal inner surface shape, there is acceptably low aberration of the image as it passes through the window. The nominal outer surface shape is determined using conventional optical design codes. Stated another way, the window nominally is of nonuniform thickness, with the intentional nonuniformity being the basis for intentional shaping of the wavefront as it passes through the window, for minimal aberration.

Other features and advantages of the present invention will be apparent from the following more detailed description of the preferred embodiment, taken in conjunction with the accompanying drawings, which illustrate, by way of example, the principles of the invention. The scope of the invention is not, however, limited to this preferred embodiment.

### BRIEF DESCRIPTION OF THE DRAWINGS

Figures 1A-1B are perspective views of a missile having a window therein, wherein Figure 1A shows a chin mounted window and Figure 1B shows a nose dome window;
Figure 2 is a schematic diagram of an optical system according to the invention;
Figure 3 is a segment of a window;
Figure 4 is a block flow diagram for an approach to designing and manufacturing the window;
Figure 5 is a graph of coefficient of drag of a dome-type window;
Figure 6 is a schematic diagram of an apparatus for testing the window; and
Figure 7 is a block flow diagram of an approach to testing and aligning the window.

### DETAILED DESCRIPTION OF THE INVENTION

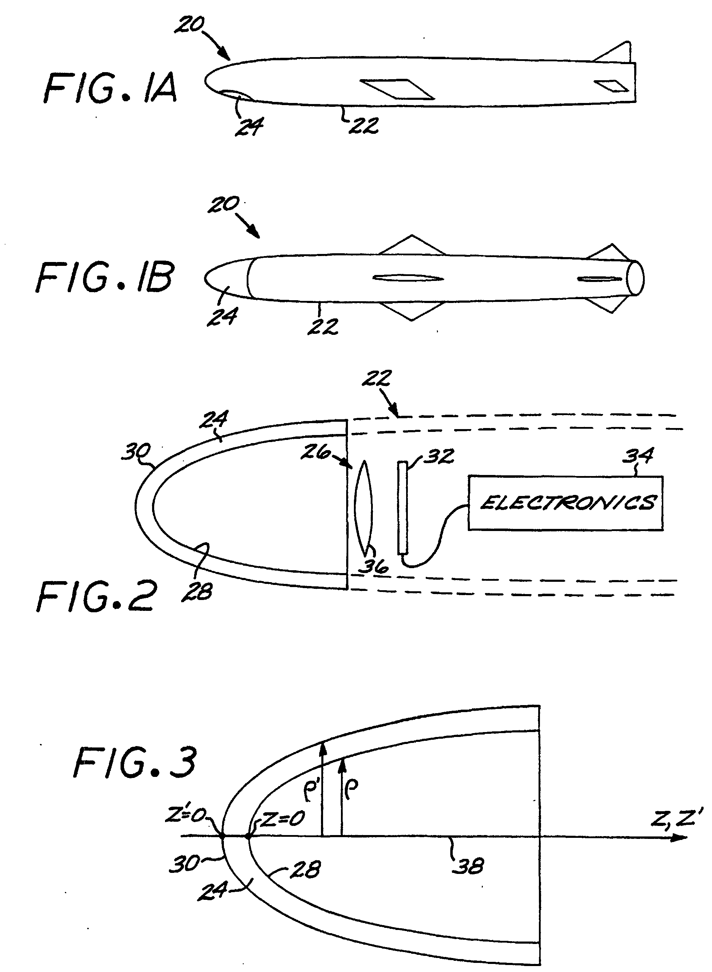

Figures 1A-1B depict a flight vehicle, in this case a supersonic missile 20, having a fuselage 22 with a curved window 24 attached thereto. In Figure 1A, the window 24 is chin-mounted, and in Figure 1B the window 24 is a nose dome. In each case, the window 24 protrudes partially into the airstream of the missile 20, and therefore may be termed a "dome-type window".

The window 24 is part of an optical system 26, which is shown generally in Figure 2. The optical system 26 includes the window 24 attached to the fuselage 22. An inner surface 28 of the window 24 is the concave surface of the window 24 that faces the inside of the fuselage 22. An outer surface 30 of the window 26 is the convex surface of the window 24 that faces outwardly and projects into the airstream as the missile 20 flies. The optical system 26 further includes a sensor 32 within the fuselage 22, and thence closer to the inner surface 28 than to the outer surface 30 of the window 24. The sensor 32 is of any operable type which is functional at a preselected wavelength or wavelength range of the incident energy. The output of the sensor 32 is an electrical signal provided to electronics 34, which may be inside the fuselage 22 or remotely located. An optical train 36, schematically indicated by a single lens, is positioned between the inner surface 28 of the window 24 and the sensor 32. The optical train 36 may include reflective elements, refractive elements, and other optical processing elements such as image compensators. The sensor 32, electronics 34, and optical train 36 may be of any operable type, including those known in the art.

Figure 3 illustrates a segment of the window 24 in greater detail. The inner surface 28 of the window 24 is conicoidal, whose shape is defined mathematically by a first conic sag relationship. The first conic sag relationship may preferably be expressed in the mathematical form${\text{z = cρ}}^{\text{2}} {\text{/(1+(1-(1+k)c}}^{\text{2}} {\text{ρ}}^{\text{2}} {\text{)}}^{\text{1/2}} \text{,}$ where z is the distance along an axis of symmetry 38 of the inner surface 28 (measured from the point at which the inner surface 28 intersects the axis of symmetry 38), ρ is the distance, measured perpendicular to the axis of symmetry 38, from the axis of symmetry 3.8 to the inner surface 28, and k and c are constants. In a most preferred case, c = 1.54 cm⁻¹ (0.60626 in⁻¹) and k = -0.77011. A useful property of a conicoidal shape is that it has two foci, which property is used to advantage in testing and alignment of the fabricated window.

The outer surface 30 of the window 24 has a nominal outer surface shape whose profile is not conicoidal, and which for many cases may be defined as a second conic sag relationship modified by at least one aspheric term. The second conic sag relationship modified by at least one aspheric term may preferably be expressed in the mathematical form${\text{z' = c'ρ'}}^{\text{2}} {\text{/(1+(1-(1+k')c'}}^{\text{2}} {\text{ρ'}}^{\text{2}} {\text{)}}^{\text{1/2}} {\text{+ Aρ'}}^{\text{4}} {\text{+ Bρ'}}^{\text{6}} {\text{+ Cρ'}}^{\text{8}} {\text{+ Dρ'}}^{\text{10}} \text{,}$ where z' is the distance along the axis of symmetry 38 of the outer surface 30 (measured from the point at which the outer surface 30 intersects the axis of symmetry 38--that is, z and z' are measured from different locations), ρ' is the distance, measured perpendicular to the axis of symmetry 38, from the. axis of symmetry 38 to the outer surface 30, and k', c', A, B, C, and D are constants. Many other mathematic forms may used to express a conic sag relationship modified by at least one aspheric term, which forms are equivalent for the present purposes. In a most preferred case using the above relationship, c' = 1.45 cm⁻¹ (0.57145 in⁻¹), k' = -0.76747, B = 9.2152 x 10⁻⁷, and A, C, and D are zero.

Thus, as shown in Figure 3, the window 24 is not of constant thickness. The inner surface 28 is nominally described by the first conic sag relationship, and the outer surface 30 is nominally defined by the second conic sag relationship modified by the addition of at least one aspheric term. The result is that the distance between the inner surface 28 and the outer surface 30 varies as a function of position across the surface of the window 24. In Figure 3, the relative distances between the inner surface 28 and the outer surface 30 as a function of position across the surface of the window 24 are exaggerated for purposes of illustration.

The window 24 is made of a transparent material selected in conjunction with the operating wavelength of the sensor 32 which is to be protected by the window 24. The sensor 32 may be responsive to, for example, all or part of the ultraviolet, visible, and infrared ranges, and the window 24 must be transparent to the range of interest at which the sensor 32 operates. Transparent materials of construction for windows 24 in specific wavelength transparency ranges are known in the art.

The window 24 is preferably designed and fabricated in the following manner. That is, the following procedure is used to select the constants in the mathematical relationships defining the nominal window surfaces, and to then fabricate and test the window. The basic shape of the window 24 is selected in order to fit with and attach to the structure of the fuselage 22 and to achieve the necessary structural characteristics and mechanical properties. Its outer surface shape is thereafter fine-tuned for acceptable optical performance, within the constraint that the inner surface 28 must remain a conicoidal shape. Once designed, the window is thereafter fabricated and tested.

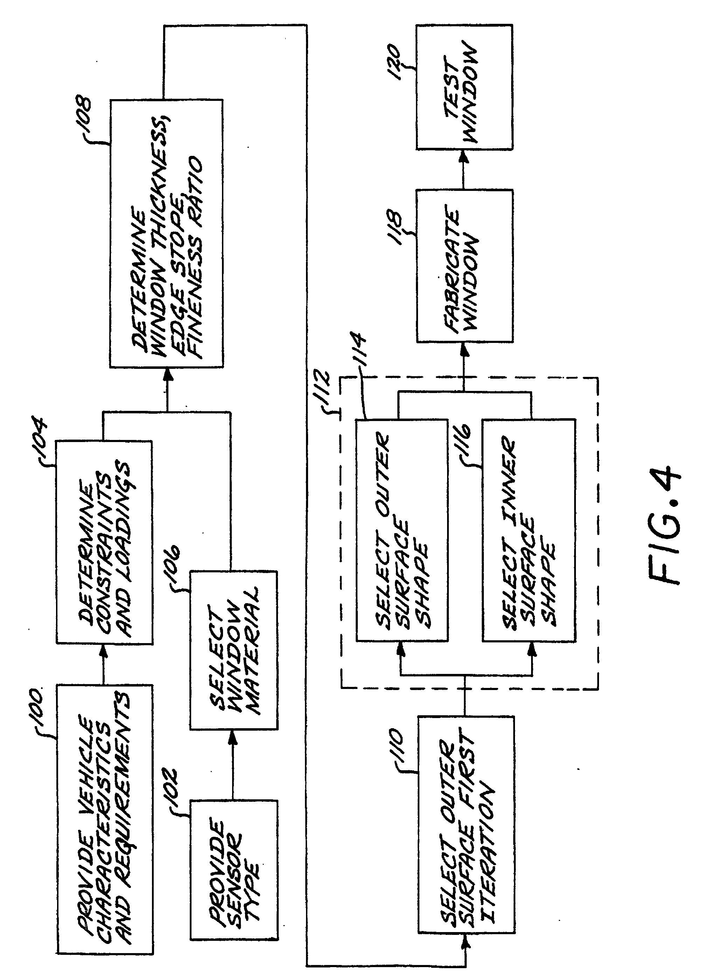

Figure 4 illustrates this process in greater detail. The shape of the fuselage 22, the shape and size of the opening therein for the window 24, and the nature of the mission (velocity, altitude, and other flight parameters) are provided, numeral 100, and the nature of the sensor is provided, numeral 102. These are system requirements established prior to the selection of the window and according to the design and mission of the missile. From the information of box 100, the physical size and constraints on the window 24 are determined, as well as aerodynamic and aerothermal loadings on the window, numeral 104. This information is determined from geometrical considerations and conventional aerodynamics and aerothermal analysis. From the type of sensor, numeral 102, the material of the window 24 is selected from available materials which are sufficiently transparent to energy at the operating wavelength(s) of the sensor and have acceptable mechanical properties, numeral 106. Such materials and their properties for sensor wavelength(s) of interest are known in the art.

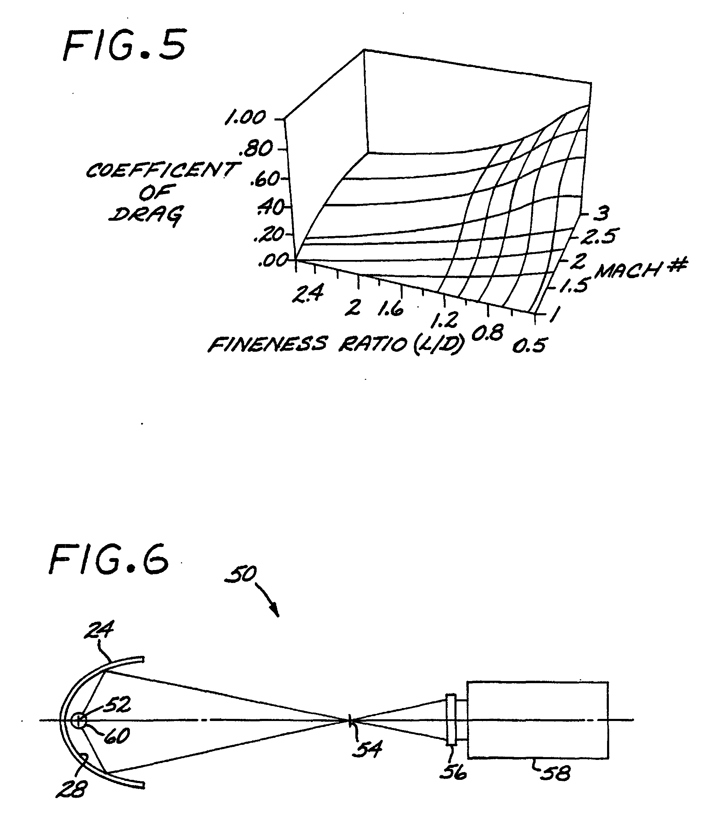

The physical size (i.e., diameter) and edge slope of the window, such that it fairs smoothly into the shape of the fuselage, is determined geometrically, together with the thickness and fineness (length-to-diameter) ratio of the window, numeral 108. The fineness ratio is the ratio of the length to diameter of the window (where the diameter is the cross sectional distance along the plane at which the window section is cut by the base conic surface). The aerodynamic performance of a nose dome window (as in Figure 1B) protruding symmetrically into an airstream as a function of the velocity of the missile in Mach number and fineness ratio, as shown in Figure 5. The selection of the fineness ratio is made to achieve an acceptably low coefficient of drag at the service velocity of the missile. The window must also have sufficient structural strength, fit within the geometric area of the surface of the fuselage that is provided, and be sufficiently large to receive the optical train and sensor.

An approximate conicoidal shape for the outer surface 30 is determined to meet the diameter, edge slope, and fineness ratio requirements, numeral 110. In this step, approximate conic sag coefficients for the outer surface 30 are determined to match the approximate conicoidal shape to the required geometry of the window. In this first design iteration, the coefficients are only approximations, because the exact shape of the outer surface 30 will be later modified with aspheric terms.

The detailed optical design of the inner surface 28 and the outer surface 30 window is then performed, numeral 112. In the optical design, conventional design codes are used to select the constants for the above-described shape equations, keeping in mind that the shape of the inner surface 28 is constrained to be a conicoidal shape. This limitation is established to facilitate subsequent testing, as will be described. The shape of the outer surface 30 is permitted to depart from the approximate conicoidal form established in step 110 in order to provide the necessary shape for optical performance. The result is a change in the shape of the outer surface 30 and in the fineness ratio of the window 24. However, as seen in Figure 5, the coefficient of drag is a relatively slowly varying function of the fineness ratio and the Mach number. The relatively small difference in shape resulting from the inclusion of the aspheric terms of the outer surface shape does not materially affect the aerodynamic performance of the window.

However, the optical properties of the window are a strongly varying function of the overall shape of the window and the relative shapes of the inner and outer surfaces. The nominal shape of the outer surface, numeral 114, and the inner surface, numeral 116, are therefore established by utilizing optical design codes to calculate ray paths of energy passing through sectors of the window, to minimize the aberration of an image viewed through the window. The design of optical elements such as lenses and windows using such design codes is well established in the art. See, for example, Donald P. Feder, "Automatic Lens Design Methods," J. Optical Society of America, vol. 47, No. 10 (1957), pages 902-912, and G.W. Forbes, "Optical system assessment for design: numeral ray tracing in the Gaussian pupil," J. Optical Society of America A, Vol. 5, No. 11 (1988), pages 1943-1956. Examples of commercially available optical design codes include "Code V" by Optical Research Associates, "OSLO" by Sinclair Optics, and "ZEEMAX" by Focus Software.

Using the design code, the RMS spot size, wavefront aberration, or other performance criteria of the image when viewed through the window and optical train are assessed and optimized. The nominal shape of the outer surface 30 is determined as that shape which minimizes the RMS (root mean square) spot size or wavefront aberration. In a convenient mathematical implementation preferably used by the inventors, the shape of the outer surface 30 is the second conic sag modified by aspheric terms, as discussed previously. However, other aspheric mathematical forms may be used in the description of the window shape, and these other mathematical forms are equivalent to the present approach for these purposes. Using the design code, the nominal shape of the inner surface 28 is conveniently determined as the first conic relationship.

After the nominal inner and outer shapes are defined, the window is fabricated, numeral 118. Techniques for manufacturing windows of various materials are known in the art. In one approach, molds for the inner and outer surface are made, and the material of the window is cast into the space between these molds. In another approach, the material of the window is machined to the desired shape.

After manufacturing, the window is tested, numeral 120, preferably using procedures to be described next. The prior discussion has dealt with the procedure for determining the "nominal" shapes of the inner and outer surfaces. When a window is manufactured from the transparent material, there are inevitably deviations from the desired nominal values and shapes. If those deviations are too large, the performance of the window becomes unacceptable and the window cannot be used or must be reworked to bring the deviations within acceptable limits. The allowable tolerances may be calculated mathematically from the optical design codes. One of the costly procedures in the manufacture of optical systems of this type is determining whether the actual shapes of the surfaces of the actual manufactured window exceed the allowable dimensional tolerances for acceptable optical performance. If they do exceed the allowable tolerances, the window cannot be used in that form.

The present approach facilitates the determination of the actual shapes of the inner and the outer surfaces of the manufactured windows, and thence the determination of whether the window is within the allowable tolerances. Figure 6 illustrates a preferred apparatus 50 for making these determinations. The first conicoidal mathematical form of the nominal shape of the inner surface 28 has two foci, an adjacent focus 52 that is close to the window 24 and a remote focus 54 that is remote from the window 24. If the inner surface of the actual manufactured window has the perfect nominal mathematical form of the first conicoidal relationship, light emitted from the remote focus 54 is reflected from all points on the inner surface 28 to the adjacent focus 52. The light may be reflected from a sphere at the adjacent focus 52, back along the same ray path to the inner surface 28 and the remote focus 54, and there measured. If, however, there is a deviation in the actual inner surface manufactured shape from the nominal conicoidal shape, the ray paths of beams reflected from the various points on the actual inner surface 28 do not focus precisely in phase back at the remote focus 54. The extent of variation in the shape of the inner surface is determined by focusing the rays to a spherical ball 60 at the adjacent focus 52 using a lens 56 and into an interferometer 58. If the extent of variation of the inner surface 28 is less than the allowable dimensional tolerance for all points, as determined by counting interference fringes of a reference beam and the reflect beam at the interferometer 58, the actual shape of the inner surface is acceptable. If the tolerances are exceeded, the inner surface 28 of the window 24 may be reworked or, in some cases, the window must be scrapped.

After the shape of the inner surface 28 is established, the shape of the outer surface 30 is determined by measuring the thickness of the window 24 between the inner surface 28 and the outer surface 30. From that information, the actual values of the constants in the second conicoidal form modified by the at least one aspheric term are determined. If these constants are within the allowed dimensional tolerances, the window is acceptable for use. Other testing procedures such as interferometry, sub aperture interferometry, and profilometry may also be used, as appropriate.

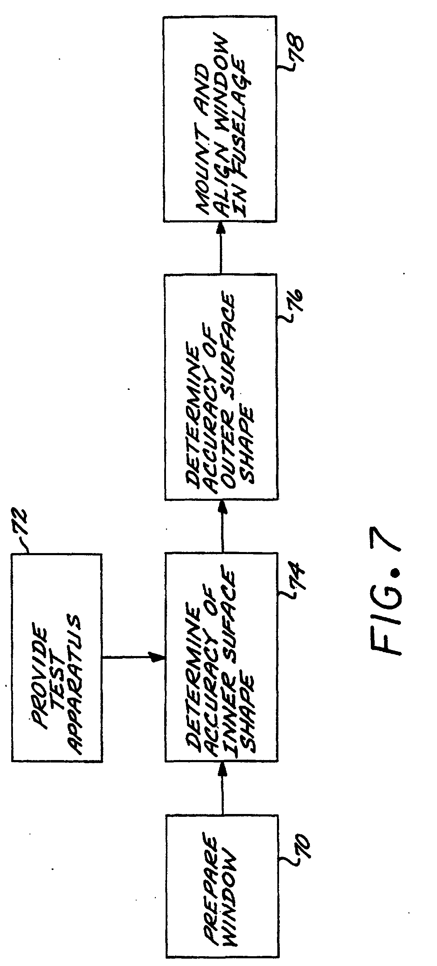

Figure 7 illustrates the steps followed in the above-described approach of the invention for testing and installing the window 24 in the fuselage 22. The window is prepared using the design approach discussed above and then fabricated to the determined shape using any operable approach, numeral 70, but preferably that discussed above in relation to Figure 4. The test apparatus 50 is provided, numeral 72. The accuracy of the actual inner surface shape is determined, numeral 74. If it is within the permitted tolerances, the accuracy of the actual outer surface shape is determined, numeral 76. If both actual surfaces are within the accuracy tolerances, the window 24 is judged acceptable, and is mounted and aligned in the fuselage 22, numeral 78. To achieve the installation with the optical system 26 properly aligned, an apparatus like that of Figure 6 may be used in the optical system of Figure 2, in place of the optical train 36 and the sensor 32. Once the alignment is achieved, the elements 56, 58, and 60 are removed, and the elements 36 and 32 are installed in with body of the missile 20. The optical system 26 is thereby precisely aligned.

Although a particular embodiment of the invention has been described in detail for purposes of illustration, various modifications and enhancements may be made without departing from the scope of the invention. Accordingly, the invention is not to be limited except as by the appended claims.

## Claims

1. An optical system (26) comprising a window (24) made of a curved piece of transparent material having an inner surface (28) and an outer surface (30);
the inner surface (28) having a nominal inner surface shape defined by a conicoidal mathematical relationship, the conicoidal inner surface shape having two focal points including an adjacent focus (52) close to the inner surface (28) and a remote focus (54) further from the inner surface (28); and
the outer surface (30) having a nominal outer surface shape defined by a general non-planar aspheric mathematical relationship, the outer surface shape, in combination with the inner surface shape, providing a net refraction.

2. The optical system (26) of the preceding claim, wherein the shape of the inner surface (28) is defined by a first conic sag relationship and wherein the shape of the outer surface (30) is defined by a second conic sag relationship modified by at least one aspheric term.

3. The optical system (26) of any preceding claim, wherein the nominal inner surface shape has a mathematical form${\text{z = cρ}}^{\text{2}} {\text{/(1+(1-(1+k)c}}^{\text{2}} {\text{ρ}}^{\text{2}} {\text{)}}^{\text{1/2}} \text{,}$ where z is the distance along an axis of symmetry of the inner surface (28), ρ is the distance from the axis of symmetry to the inner surface (28), and k and c are non-zero constants.

4. The optical system (26) of any preceding claim, wherein the nominal outer surface shape has a mathematical form
z' = c'ρ'²/(1+(1-(1 + k')c'²ρ'²)^{1/2} + Aρ'⁴ + Bρ'⁶ + Cρ'⁸ + Dρ'¹⁰,
where z' is the distance along an axis of symmetry of the outer surface (30), ρ' is the distance from the axis of symmetry to the outer surface (30), and k' and c' are non-zero constants, A, B, C, and D are constants, and at least one of A, B, C, and D is a non-zero constant.

5. The optical system (26) of any preceding claim, wherein the transparent material is transparent to ultraviolet energy.

6. The optical system (26) of any of claims 1 to 4, wherein the transparent material is transparent to visible light.

7. The optical system (26) of any of claims 1 to 4, wherein the transparent material is transparent to infrared energy.

8. A flight vehicle (20) having a fuselage (22) comprising the window (24) of the optical system (26) of any of the preceding claims attached to the fuselage (22).

9. A flight vehicle (20) as set forth in the preceding claim, further comprising a sensor (32) sensitive to energy of an operating wavelength, the sensor (32) being positioned closer to the inner surface (28) of the window (24) than to the outer surface (30), and wherein the transparent material is transparent to energy of the operating wavelength.

10. A flight vehicle (20) as set forth in the preceding claim, wherein the sensor (32) provides an electrical output and wherein an electronics device (34) receives the electrical output of the sensor.

11. A flight vehicle (20) as set forth in any of claims 8 to 10 wherein the electronics device (34) is located within the fuselage (22).

12. A method of testing the window (24) of any of the preceding claims, comprising the steps of:
passing at least one test beam in a forward ray path from the remote focus (54) to the adjacent focus (52) VIA reflection on the inner surface (28);
then passing the test beam from the adjacent focus (52) to the remote focus (54) the inner surface (28) in a return ray path that would be perfectly the same ray path as the forward ray path if the shape of the inner surface (28) did not have defects; and
determining defects in the inner surface (28) based on the return ray path.

13. A method as set forth in the preceding claim, wherein said passing steps comprise:
transmitting a first test beam in a first forward ray path from the remote focus (54) to a first location on the inner surface (28) that is on a first side of the axis of symmetry;
transmitting a second test beam in a second forward ray path from the remote focus (54) to a second location on the inner surface (28) to the adjacent focus (52), the second location being on the opposite side of the axis of symmetry;
reflecting the first test beam from the adjacent focus (52) to the first location on the inner surface (28);
reflecting the second test beam from the adjacent focus (52) to the second location on the inner surface (28).

14. A method as set forth in claim 13, wherein the reflecting steps are performed by a spherical mirror.

15. A method as set forth in claim 13 or claim 14, wherein the determining step comprises interferometrically combining the return test beam and a reference beam.

16. A method as set forth in claim 15, wherein the determining step further comprises counting fringe displacements to determine the number of half wavelengths by which the inner surface (28) varies from that desired.

17. A method of designing the window (24) of any of claims 1 to 7, the method comprising the steps of:
selecting (110) an approximate conicoidal shape for the outer surface (30) based on non-optical considerations; and
revising the shape of the inner (28) and outer (30) surfaces to improve optical performance, whilst constraining the shape of the inner surface (28) to be conicoidal.

18. A method as set forth in claim 17, wherein the step of selecting an approximate conicoidal shape for the outer surface (30) comprises selecting a shape in order to fit with and attach to the structure of a fuselage (22) and to achieve the necessary structural characteristics and mechanical properties.

19. A method as set forth in claim 17 or claim 18, wherein the shape of the outer surface (30) is permitted to depart from the approximate conicoidal shape during the revising step(s).

20. A method as set forth in any of claims 17 to 19, wherein acceptable optical performance is reached when the nominal shape of the outer surface (30) minimizes the RMS (root mean square) spot size or wavefront aberration.

## Patentansprüche

1. Optisches System (26), welches ein Fenster (24) enthält, das aus einem gekrümmten Stück eines transparenten Materials gefertigt ist und eine innere Fläche (28) sowie eine äußere Fläche (30) aufweist;
wobei die innere Fläche (28) eine nominelle Innenflächengestalt aufweist, die durch eine kegelschnittartige mathematische Beziehung definiert ist und wobei die kegelschnittartige Innenflächengestalt zwei Brennpunkte aufweist, nämlich einen benachbarten Brennpunkt (52) nahe an der Innenfläche (28) und einen entfernten Brennpunkt (54) in größerer Entfernung von der Innenfläche (28); und
wobei fernerhin die Außenfläche (30) eine nominelle Außenflächengestalt hat, welche durch eine im allgemeinen nichtplanare asphärische mathematische Beziehung definiert ist und welche in Zusammenwirkung mit der Innenflächengestalt eine resultierende Brechung erzeugt.

2. Optisches System (26) nach dem vorhergehenden Anspruch, bei welchem die Gestalt der Innenfläche (28) durch eine erste Kegelschnittbeziehung definiert ist, und bei welcher die Gestalt der Außenfläche (30) durch eine zweite Kegelschnittbeziehung definiert ist, welche durch mindestens einen asphärischen Ausdruck modifiziert ist.

3. Optisches System (26) nach irgendeinem vorhergehenden Anspruch, bei welchem die nominelle Innenflächengestalt durch folgende mathematische Formel definiert ist:${\text{z = cp}}^{\text{2}} {\text{/(1+(1-(1+k)c}}^{\text{2}} {\text{p}}^{\text{2}} {\text{)}}^{\text{1/2}} \text{,}$ wobei z der Abstand längs einer Symmetrieachse der Innenfläche (28) ist, p der Abstand von der Symmetrieachse zu der Innenfläche (28) ist, und k und c von Null verschiedenen Konstante sind.

4. Optisches System (26) nach irgendeinem vorhergehenden Anspruch, bei welchem die nominelle Außenflächengestalt durch folgende mathematische Formel definiert ist:${\text{z'=c'p'/(1+(1-1+k')c'}}^{\text{2}} {\text{p'}}^{\text{2}} {\text{)}}^{\text{1/2}} {\text{+Ap'}}^{\text{4}} {\text{+Bp'}}^{\text{6}} {\text{+Cp'}}^{\text{8}} {\text{+Dp'}}^{\text{10}} \text{,}$ worin z' der Abstand längs einer Symmetrieachse der Außenfläche (30) ist, p' der Abstand von der Symmetrieachse zu der Außenfläche (30) ist, und k' und c' von Null verschiedene Konstanten sind, A, B, C und D Konstanten sind und mindestens eine der Konstanten A, B, C und D eine von Null verschiedene Konstante ist.

5. Optisches System (26) nach irgendeinem vorausgehenden Anspruch, bei welchem das transparente Material gegenüber Ultraviolettenergie transparent ist.

6. Optisches System (26) nach einem der Ansprüche 1 bis 4, bei welchem das transparente Material gegenüber sichtbarem Licht transparent ist.

7. Optisches System (26) nach irgendeinem der Ansprüche 1 bis 4, bei welchem das transparente Material gegenüber Infrarotenergie transparent ist.

8. Fluggerät (20) mit einem Rumpf (22), welcher das Fenster (24) des optischen Systems (26) nach irgendeinem der vorausgehenden Ansprüche enthält, das an dem Rumpf (22) befestigt ist.

9. Fluggerät (20) nach dem vorausgehenden Anspruch, welches weiter einen Sensor (32) enthält, welcher gegenüber Energie einer Betriebswellenlänge empfindlich ist, wobei der Sensor (32) näher zu der Innenfläche (28) des Fensters (24) als zu der Außenfläche (30) angeordnet ist und wobei das transparente Material gegenüber Energie der Betriebswellenlänge transparent ist.

10. Fluggerät (20) nach dem vorausgehenden Anspruch, bei welchem der Sensor (32) einen elektrischen Ausgang liefert und eine elektronische Einrichtung (34) den elektrischen Ausgang des Sensors empfängt.

11. Fluggerät (20) nach irgendeinem der Ansprüche 8 bis 10, bei welchem eine oder die elektronische Einrichtung (34) innerhalb des Rumpfes (22) angeordnet ist.

12. Verfahren zur Prüfung des Fensters (24) gemäß irgendeinem der vorhergehenden Ansprüche, wobei das Verfahren folgende Schritte umfaßt:
Durchleiten mindestens eines Prüfungsstrahles auf einem vorwärts gerichteten Strahlenweg von dem entfernten Brennpunkt (54) zu dem naheliegenden Brennpunkt (52) hin über eine Reflexion an der Innenfläche (28);
darauffolgendes Führen des Prüfungsstrahles von dem naheliegenden Brennpunkt (52) zu dem entfernten Brennpunkt (54) über eine Reflexion an der Innenfläche (28) in einem zurückführenden Strahlenweg, der vollkommen derselbe Strahlenweg wie der vorwärtsgerichtete Strahlenweg wäre, wenn die Form der Innenfläche (28) nicht Defekte aufwiese, und
Bestimmen der Defekte an der Innenfläche (28) auf der Basis des zurückkehrenden Strahlenweges.

13. Verfahren nach dem vorausgehenden Anspruch, bei welchem die Schritte der Strahlenwegführung folgendes umfassen:
Aussenden eines ersten Prüfstrahles auf einem ersten vorwärtsgerichtetem Strahlenweg von dem entfernten Brennpunkt (54) auf einem ersten Ort auf der Innenfläche (28) der sich auf einer ersten Seite der Symmetrieachse befindet;
Aussenden eines zweiten Prüfstahles auf einem zweiten vorwärtsgerichteten Strahlungsweg von dem entfernten Brennpunkt (54) zu einem zweiten Ort der Innenfläche (28), zu dem naheliegenden Brennpunkt (52) hin, wobei der zweite Ort auf der gegenüberliegenden Seite der Symmetrieachse gelegen ist;
Reflektieren des ersten Prüfstrahls von dem naheliegenden Brennpunkt (52) zu dem ersten Ort auf der Innenfläche (28);
Reflektieren des zweiten Prüfstrahl von dem naheliegenden Brennpunkt (52) zu dem zweiten Ort auf der Innenfläche (28).

14. Verfahren nach Anspruch 13, bei welchem die Reflexionsschritte durch einen sphärischen Spiegel ausgeführt werden.

15. Verfahren nach Anspruch 13 oder 14, bei welchem der Schritt des Bestimmens das interferometische Kombinieren des zurückkehrenden Prüfstrahles und eines Bezugsstrahles umfaßt.

16. Verfahren nach Anspruch 15, bei welchem der Schritt des Bestimmens weiter das Auszählen von Streifenverschiebungen umfaßt, um die Anzahl von Halbwellenlängen zu bestimmen, um welche die Innenfläche (28) gegenüber der gewünschten Form verändert ist.

17. Verfahren zur Konstruktion des Fensters (24) nach irgendeinem der Ansprüche 1 bis 7, wobei das Verfahren folgende Schritte umfaßt:
Auswählen (110) einer angenäherten kegelschnittartigen Gestalt der Außenfläche (30) auf der Basis nicht-optischer Überlegungen; und
Überarbeiten der Form der Innenfläche (28) und der Außenfläche (30) zur Verbesserung der optischen Eigenschaften, während bezüglich der Form der Innenfläche (28) auf die kegelschnittartige Gestalt hingearbeitet wird.

18. Verfahren nach Anspruch 17, bei welchem der Schritt der Auswahl einer annähernd kegelschnittartigen Gestalt der Außenfläche (30) die Auswahl einer Gestalt solcher Art enthält, daß sie sich der Struktur eines Rumpfes (22) anpaßt und an diesen angefügt werden kann und die notwendigen baulichen Eigenschaften und mechanischen Eigenschaften erreicht.

19. Verfahren nach Anspruch 17 oder Anspruch 18, bei welchem zugelassen wird, daß die Gestalt der Außenfläche (30) von der angenäherten kegelschnittartigen Gestalt während des Überarbeitungsschrittes oder der Überarbeitungsschritte abweicht.

20. Verfahren nach einem der Ansprüche 17 bis 19, bei welchem eine annehmbare optische Eigenschaft erreicht wird, wenn die nominelle Form der Außenfläche (30) den quadratischen Mittelwert (RMS) der Punktgröße oder die Wellenfrontabweichung minimal macht.

## Revendications

1. Système optique (26) comprenant une fenêtre (24) faite d'une pièce incurvée de matériau transparent ayant une surface intérieure (28) et une surface extérieure (30) ;
la surface intérieure (28) ayant une forme de surface intérieure nominale définie par une relation mathématique de type conoïdale, la forme de surface intérieure conoïdale ayant deux points focaux incluant un foyer adjacent (52) proche de la surface intérieure (28) et un foyer distant (54) plus loin de la surface intérieure (28) ; et
la surface extérieure (30) ayant une forme de surface extérieure nominale définie par une relation mathématique d'asphéricité non plane, la forme de surface extérieure, en association avec la forme de surface intérieure, produisant une réfraction nette.

2. Système optique (26) selon la revendication précédente, dans lequel la forme de la surface intérieure (28) est définie par une première relation d'évidement conique et dans lequel la forme de la surface extérieure (30) est définie par une seconde relation d'évidement conique modifiée par au moins un terme d'asphéricité.

3. Système optique (26) selon l'une quelconque des revendications précédentes, dans lequel la forme de surface intérieure nominale présente la forme mathématique suivante :${\text{z = cρ}}^{\text{2}} {\text{/(1+(1-(1+k)c}}^{\text{2}} {\text{ρ}}^{\text{2}} {\text{)}}^{\text{1/2}} \text{,}$ où z est la distance suivant un axe de symétrie de la surface intérieure (28), ρ est la distance de l'axe de symétrie à la surface intérieure (28), et k et c sont des constantes non nulles.

4. Système optique (26) selon l'une quelconque des revendications précédentes, dans lequel la forme de surface extérieure nominale présente la forme mathématique :${\text{z' = c'ρ'}}^{\text{2}} {\text{/(1+(1-(1+k')c'}}^{\text{2}} {\text{ρ'}}^{\text{2}} {\text{)}}^{\text{1/2}} {\text{+Aρ'}}^{\text{4}} {\text{+Bρ'}}^{\text{6}} {\text{+Cρ'}}^{\text{8}} {\text{+Dρ'}}^{\text{10}} \text{,}$ où z' est la distance suivant un axe de symétrie de la surface extérieure (30), ρ' est la distance de l'axe de symétrie à la surface extérieure (30), et k' et c' sont des constantes non nulles, A, B, C, et D sont des constantes, et au moins l'un de A, B, C et D est une constante non nulle.

5. Système optique (26) selon l'une quelconque des revendications précédentes, dans lequel le matériau transparent est transparent à de l'énergie ultraviolette.

6. Système optique (26) selon l'une quelconque des revendications 1 à 4, dans lequel le matériau transparent est transparent à la lumière visible.

7. Système optique (26) selon l'une quelconque des revendications 1 à 4, dans lequel le matériau transparent est transparent à de l'énergie infrarouge.

8. Véhicule volant (20) ayant un fuselage (22) comprenant la fenêtre (24) du système optique (26) selon l'une quelconque des revendications précédentes fixée au fuselage (22).

9. Véhicule volant (20) selon la revendication précédente, comprenant en outre un capteur (32) sensible à de l'énergie ayant une longueur d'onde de fonctionnement, le capteur (32) étant positionné plus près de la surface intérieure (28) de la fenêtre (24) que de la surface extérieure (30), et dans lequel le matériau transparent est transparent à de l'énergie ayant la longueur d'onde de fonctionnement.

10. Véhicule volant (20) selon la revendication précédente, dans lequel le capteur (32) fournit une sortie électrique et dans lequel un dispositif électronique (34) reçoit la sortie électrique du capteur.

11. Véhicule volant (20) selon l'une quelconque des revendications 8 à 10, dans lequel le dispositif électronique (34) est placé à l'intérieur du fuselage (22).

12. Procédé pour tester la fenêtre (24) selon l'une quelconque des revendications précédentes, comprenant les étapes de :
passage d'au moins un faisceau de test selon un trajet de rayon aller, du foyer distant (54) au foyer adjacent (52) via une réflexion sur la surface intérieure (28) ;
puis de passage du faisceau de test du foyer adjacent (52) au foyer distant (54) via une réflexion sur la surface intérieure (28) selon un trajet de rayon retour qui serait parfaitement identique au trajet de rayon aller si la forme de la surface intérieure (28) ne présentait pas de défauts ; et
détermination de défauts dans la surface intérieure (28) sur la base du trajet de rayon retour.

13. Procédé selon la revendication précédente, dans lequel lesdites étapes de passage comprennent :
la transmission d'un premier faisceau de test selon un premier trajet de rayon aller du foyer distant (54) à une première position sur la surface intérieure (28) qui est d'un premier côté de l'axe de symétrie ;
la transmission d'un second faisceau de test selon un second trajet de rayon aller du foyer distant (54) à une seconde position sur la surface intérieure (28) et au foyer adjacent (52), la seconde position étant du côté opposé de l'axe de symétrie ;
la réflexion du premier faisceau de test du foyer adjacent (52) à la première position sur la surface intérieure (28) ;
la réflexion du second faisceau de test du foyer adjacent (52) à la seconde position sur la surface intérieure (28).

14. Procédé selon la revendication 13, dans lequel les étapes de réflexion sont effectuées sur un miroir sphérique.

15. Procédé selon la revendication 13 ou 14, dans lequel l'étape de détermination comprend la combinaison par interférométrie du faisceau de test de retour et d'un faisceau de référence.

16. Procédé selon la revendication 15, dans lequel l'étape de détermination comprend en outre le comptage de déplacements de franges pour déterminer le nombre de demi-longueurs d'onde dont varie la surface intérieure (28) par rapport à celle que l'on souhaite.

17. Procédé pour concevoir la fenêtre (24) selon l'une quelconque des revendications 1 à 7, le procédé comprenant les étapes de :
sélection (110) d'une forme conoïdale approximative pour la surface extérieure (30) sur la base de considérations non optiques ; et
révision de la forme des surfaces intérieure (28) et extérieure (30) pour améliorer les performances optiques, tout en contraignant la forme de la surface intérieure (28) à être conoïdale.

18. Procédé selon la revendication 17, dans lequel l'étape de sélection d'une forme conoïdale approximative pour la surface extérieure (30) comprend la sélection d'une forme permettant un ajustement et une fixation à la structure d'un fuselage (22) et d'assurer les caractéristiques structurelles et les propriétés mécaniques nécessaires.

19. Procédé selon la revendication 17 ou 18, dans lequel on permet à la forme de la surface extérieure (30) de s'écarter de la forme conoïdale approximative pendant la ou les étape(s) de révision.

20. Procédé selon l'une quelconque des revendications 17 à 19, dans lequel des performances optiques acceptables sont atteintes lorsque la forme nominale de la surface extérieure (30) minimise la valeur quadratique moyenne (RMS) de la taille du point lumineux ou de l'aberration du front d'onde.
